# EUROPÄISCHE PATENTSCHRIFT

(11) **EP 2 003 412 B1**
(45) Veröffentlichungstag und Bekanntmachung des Hinweises auf die Patenterteilung: **11.09.2013**
(21) Anmeldenummer: 08158073.0
(22) Anmeldetag: 11.06.2008
(51) Int. Cl.: F26B 17/04, B65G 39/07, B65G 39/04

(54) **Trocknungsvorrichtung für pastöse oder körnige Stoffe**
Drying device for paste-like or granular material
Dispositif de séchage pour matières pâteuses ou granuleuses

(30) Priorität: 11.06.2007 DE 202007008362 U
(43) Veröffentlichungstag der Anmeldung: 17.12.2008
(73) Patentinhaber: Big Dutchman International GmbH, 49377 Vechta (DE)
(72) Erfinder: Themann, Ludger, 49377, Vechta (DE)
(74) Vertreter: Eisenführ, Speiser & Partner

(56) Entgegenhaltungen:
- DE-A1- 3 719 729
- DE-C- 707 987
- US-A- 1 459 211
- US-A- 2 023 611
- US-A- 2 052 900
- US-A- 2 622 447
- US-A- 2 647 618
- US-A- 3 023 824
- US-A- 5 537 757

## Beschreibung

Die Erfindung betrifft eine Trocknungsvorrichtung für pastöse oder körnige Stoffe, umfassend ein Gehäuse mit zumindest einer Einlassöffnung und zumindest einer Auslassöffnung für Trocknungsluft, zumindest einen Horizontal-Bandförderer, der so angeordnet ist, dass er die zu trocknenden Stoffe von einer Aufgabestelle zu einer Abgabestelle fördert und der ein Förderband umfasst, auf dem die zu trocknenden Stoffe während der Förderung lagerbar sind, das eine Mehrzahl von Perforationen aufweist und das so in dem Gehäuse angeordnet ist, dass von der Einlass- zur Auslassöffnung strömende Trocknungsluft die Perforationen durchströmt.

Trocknungsvorrichtungen der vorgenannten Art werden für eine Vielzahl von Prozessanwendungen eingesetzt. Typische Anwendungsgebiete sind beispielsweise die Trocknung organischer oder anorganischer Stoffe in der Lebensmittelindustrie. Eine spezifische Anwendung solcher Trocknungsvorrichtungen ist die Trocknung von Kot, der in einem Stall anfällt, in dem Nutztiere gehalten werden, um diesen lager- und transportfähig zu machen.

Typischerweise sind Trocknungsvorrichtungen der vorgenannten Art solcherart aufgebaut, dass mehrere Horizontal-Bandförderer solcherart gestaffelt übereinander angeordnet sind, dass der zu trocknende Stoff auf dem obersten Bandförderer in einer ersten Richtung gefördert wird, am Förderbandende auf den darunter liegenden Bandförderer fällt und in einer entgegengesetzten Richtung gefördert wird, am Ende des zweiten Bandförderers wiederum auf einen darunter liegenden Bandförderer fällt, der die Stoffe in der Richtung des obersten Bandförderers fördert u.s.w. Bei solchen Trocknungsvorrichtungen mit mehreren Etagen von Horizontal-Bandförderern ist es bekannt, Einlass- und Auslassöffnungen vorzusehen, welche die Trocknungsluft für eine oder mehrere Etagen durchleiten. In der spezifischen Anwendung solcher Trocknungsvorrichtungen zur Trocknung von Kot aus Stallgebäuden ist es bekannt, als Trocknungsluft die Abluft aus dem Stallgebäude zu verwenden.

Aus DE 30 30 604 C2 ist eine Trocknungsvorrichtung bekannt, bei welcher die zu trocknende Masse auf einem undurchlässigen Endlosförderband gelagert wird und mittels eines über die Oberfläche streichenden Luftstroms getrocknet wird. Zwar kann hierbei eine hohe Stabilität und damit große Erstreckung des Förderbandes erreicht werden, allerdings ist die Trocknungswirkung nur gering.

Aus DE 1 127 380 A ist eine Wärmeübertragungsvorrichtung bekannt, bei der Wärme auf von einem flüssigen Medium auf ein Gut übertragen wird, das auf einem Förderband lagert und durch dieses von dem flüssigen Medium getrennt ist. Auch hier kann eine hohe Stabilität und damit große Erstreckung des Förderbandes erreicht werden, allerdings ist die Trocknungswirkung wiederum nur gering.

Aus DE 1 070 917 A ist eine Entwässerungsvorrichtung für Papiermaschinen bekannt, bei der die zu trocknende Masse auf einem durchlochten Band gelagert wird. Das Band wird durch mehrere Walzen gelagert. Zwar kann durch diese Lagerungsweise eine ausreichende Stützung des Bandes erreicht werden, allerdings ist der Luftzutritt zu den Löchern des Bandes behindert und dadurch die Trocknungswirkung herabgesetzt.

Ein spezifisches Problem im Zusammenhang mit solchen Trocknungsvorrichtungen ist die erzielbare Durchsatzmenge pro Zeiteinheit. Es ist grundsätzlich wünschenswert, die Verweilzeit der zu trocknenden Stoffe innerhalb der Trocknungsvorrichtung möglichst kurz und die den zu trocknenden Stoffe entzogene Feuchtigkeitsmenge möglichst hoch zu halten. Zu diesem Zwecke ist es aus EP 1 166 024 bekannt, eine spezifische Anordnung von Einlass- und Auslassöffnung vorzusehen, um hier-durch eine verbesserte Zufuhr trockener Luft und Abfuhr der mit Feuchtigkeit angereicherten Luft für jeden der mehreren Bandförderer zu erzielen. Zwar kann mit diesem Konzept eine grundsätzliche Steigerung der Durchsatzmenge pro Zeiteinheit bei zufriedenstellender Trocknungsleistung erreicht werden, jedoch stößt dieses Prinzip an prozesstechnische Grenzen und kann lediglich den Aspekt der Luftzufuhr und Luftabfuhr verbessern.

Es ist weiterhin bekannt, die Höhe des Schichtaufbaus des zu trocknenden Stoffes auf dem Förderband zu vergrößern und dies mit einer erhöhten Druckdifferenz der Trocknungsluft zu kombinieren, um sicherzustellen, dass die zu trocknende Masse nach wie vor ausreichend durchströmt wird. Jedoch hat dieser Ansatz einerseits den Nachteil, dass durch die erhöhte Druckdifferenz unerwünschte Verunreinigungen innerhalb der Trocknungsvorrichtungen erzeugt werden und andererseits die Trocknung selbst über die erhöhte Schichtdicke des zu trocknenden Stoffes nicht in der gewünschten Gleichmäßigkeit sichergestellt werden kann.

Aus US 5,537,757 ist eine Trocknungsvorrichtung bekannt, bei der das zu trocknende Gut auf einem Band 34 gefördert wird. Das Band 34 ist mittels feststehenden Flanschen und einem Mittelstreifen von unten abgestützt und kann hierdurch zwischen diesen Stützen durchhängen. Im Bereich zwischen den Stützen sind vereinzelt Wellen unterhalb des Obertrums des Förderbandes angeordnet. Auf diesen Wellen sind jeweils endseitig Zahnräder angeordnet, die in das Förderband eingreifen und durch dieses angetrieben werden. Weiterhin sind auf den Wellen Kreuzbleche angeordnet, die durch die Rotation der Wellen das Förderband periodisch anheben und hierdurch das zu trocknende Gut auf dem Förderband aufschüttein.

Weiterhin ist es bekannt, die Horizontal-Bandförderer solcherart auszubilden, dass das Förderband zwischen den beiden äußeren Umlenkrollen frei verläuft. Hierdurch wird zwar ein ungehinderter Zutritt der Trocknungsluft zu jeder der Perforationen des Förderbands erzielt, jedoch hat dieses Konzept konstruktive Nachteile, welche die Durchsatzmenge des zu trocknenden Stoffes herabsetzen und den Wartungsaufwand erhöhen. So kann einerseits die Spannung des Förderbandes nicht über einen material-technisch vorgegebenen Wert erhöht werden, ohne dass bereits nach kurzer Betriebsdauer eine unerwünschte Längung des Förderbands auftreten würde, welche den kurzfristigen Austausch des Förderbands erforderlich machen würde. Dies wiederum begrenzt die Gesamtlänge des Förderbandes und macht es daher unmöglich, das Förderband in einer vorteilhaften Länge, beispielsweise der Breite der Stirnseite eines Stallgebäudes entsprechend, auszubilden. Schließlich kann bei diesem Konzept kein höherer Schichtaufbau der zu trocknenden Stoffe auf dem Förderband gewählt werden, da hierdurch die Belastung des Förderbandes einen zu starken Durchhang bzw. eine zu starke Längung des Förderbands bewirken würde.

Ein spezifisches Problem im Zusammenhang mit der Trocknung einer Vielzahl von Stoffen ist die Verschmutzung solcher Trocknungsvorrichtungen, beispielsweise durch Stoffpartikel oder -Mengen, welche durch die Perforationen der Förderbänder hindurchtreten. Dies kann zu unerwünschtem Schichtaufbau der zu trocknenden Stoffe an funktionsrelevanten Stellen der Trocknungsvorrichtung führen, welche die Funktion beeinträchtigen.

Der Erfindung liegt die Aufgabe zugrunde, eine Trocknungsvorrichtung der vorgenannten Art sowie die entsprechenden Verfahren zum Trocknen von pastösen oder körnigen Stoffen solcherart weiterzubilden, dass eine erhöhte Durchsatzmenge bei gleichbleibendem oder erhöhtem Trocknungsgrad erzielt wird bzw. eine erhöhte Trocknungsrate bei gleichbleibender Durchsatzmenge erzielt wird.

Diese Aufgabe wird durch eine Trocknungsvorrichtung nach Anspruch 1 und ein Verfahren nach Anspruch 13 gelöst.

Durch die erfindungsgemäße Trocknungsvorrichtung wird es ermöglicht, die Tragfähigkeit des Förderbands zu erhöhen bzw. dessen Durchhang zu vermindern, ohne dass hierzu die Spannung des Förderbands erhöht werden muss. Die durch die Anordnung solcher Stützelemente hervorgerufene, nachteilhafte Abdeckung von Perforationen und somit Herabsetzung der Trocknungsleistung aufgrund verringerten Durchsatzquerschnitts kann erfindungsgemäß verringert werden, indem die Auflage des Förderbands auf einer sich radial erstreckenden und umlaufenden Stützfläche erfolgt. Auf diese Weise entsteht zwischen dem Stützelement und dem Förderband ein freier Raum, durch den die Trocknungsluft hindurchtreten kann und folglich auch Perforationen erreichen kann, die sich unmittelbar oberhalb des Stützelements befinden.

Die Stützfläche ist erfindungsgemäß drehbar in Bezug auf das Förderband, um eine rollende Abstützung, frei von Relativbewegungen zwischen Stützfläche und Förderband zu erzielen. Die drehbare Lagerung kann beispielsweise durch eine Drehlagerung zwischen Stützfläche und Stützelement und/oder zwischen Stützelement und Gehäuse erzielt werden.

Es hat sich überraschend gezeigt, dass mit der erfindungsgemäßen Trocknungsvorrichtung auch ein unerwünschter Aufbau des zu trocknenden Stoffes auf den Stützelementen sowie auf Umlenkrollen des Förderbands oder der Unterseite des Förderbandes vollständig oder weitestgehend verhindert werden kann. Durch den praktisch nur in einzelnen Punkten stattfindenden Kontakt zwischen den Stützelementen und dem Förderband tritt eine zyklische Krafteinwirkung auf das Förderband auf, welche einen solchen Schichtaufbau bereits bei geringer Schichtstärke ablöst bzw. die Anhaftung von Vorneherein verhindert. Mit der Erfindung ist es daher erstmals möglich, die Bandförderer von Trocknungsvorrichtungen der eingangs genannten Art einerseits solcherart abzustützen, dass eine unerwünschte Längung des Förderbandes verhindert werden kann und andererseits die Wartungsintervalle, welche durch Anhaftungen erforderlich würden, erheblich zu verlängern oder eine Wartung aufgrund solcher Anhaftungen vollständig zu vermeiden.

Grundsätzlich kann ein erfindungsgemäßes Stützelement einteilig oder mehrteilig ausgeführt werden, beispielsweise indem es aus mehreren axial aneinandergereihten Segmenten zusammengesetzt wird oder als Grundzylinder, auf den die umlaufenden Stützflächen als separate Bauteile aufgeschoben/aufgesteckt sind, ausgeführt wird. Die Stützelemente können beispielsweise auf ihrer Außenfläche mit einem Schneckengewinde versehen sein, um auf diese Weise die umlaufenden Stützflächen auszubilden, oder es können Drahtringe, O-Ringe oder dergleichen auf einen Grundkörper aufgeschoben werden, um diese umlaufenden Stützflächen bereitzustellen.

Bei einer ersten vorteilhaften Ausführungsform ist die umlaufende Stützfläche durch eine sich radial erstreckende Erhebung, insbesondere durch die äußere Umfangsfläche eines sich radial erstreckenden Rings ausgebildet. Auf diese Weise wird eine ununterbrochene Abrollfläche bereitgestellt, auf welcher das Förderband gleichmäßig abrollen kann. Die Stützfläche kann beispielsweise als umlaufender Ring an dem Stützelement ausgebildet sein. Alternativ kann die Stützfläche als umlaufendes Außengewinde, aufgeschobene Schraubenfeder oder dergleichen an dem Stützelement ausgebildet sein.

Bei einer weiteren, alternativen, bevorzugten Ausführungsform ist die umlaufende Stützfläche durch mehrere, sich radial erstreckende Erhebungen, die entlang einer um das Stützelement auf einer zirkulär umlaufenden Linie aneinandergereiht sind, insbesondere durch die Endflächen einer Vielzahl von sich radial erstreckenden Fingern ausgebildet. Bei dieser bevorzugten Ausgestaltung wird eine Stützfläche bereitgestellt, die durch mehrere, aneinandergereihte Stützflächenbereiche gebildet wird und auf diese Weise eine unterbrochene Abrollfläche für das Förderband darstellt. Diese Ausgestaltung erhöht die Luftdurchsatzmenge durch die Perforationen des Förderbandes weiter, da nicht nur in axialer Richtung eine nur teilweise Auflage des Förderbands auf dem Stützelement bewirkt wird, sondern auch in umlaufender Richtung. Die sich radial erstreckenden Erhebungen können beispielsweise durch radial oder tangential von dem Stützelement verlaufende Finger, Stege, Dorne oder dergleichen gebildet werden.

Eine weitere vorteilhafte Ausführungsform sieht vor, dass mehrere axial voneinander beabstandete Stützflächen an einem Stützelement ausgebildet sind, auf welchen das Förderband abgestützt ist. Auf diese Weise können große Förderbandbreiten mit dem Stützelement gemäß der Erfindung abgestützt werden und hierbei die Kontaktfläche zwischen Förderband-Unterseite und Stützelement auf mehrere praktisch punktförmige Kontaktflächen reduziert werden.

Weiterhin ist es bevorzugt, wenn das Stützelement sich über die gesamte Förderbandbreite erstreckt und die Kontaktfläche zwischen dem Förderband und der Stützfläche bzw. der Summe der Stützflächen an einem Stützelement sich in axialer Richtung um weniger als die Hälfte, vorzugsweise weniger als ein Viertel der Förderbandbreite erstreckt. Durch die so definierte Kontaktflächenerstreckung in axialer Richtung wird ermöglicht, dass mehr als die Hälfte bzw. mehr als drei Viertel des Raumes zwischen Förderband und Stützelement als Luftdurchtrittsbereich genutzt werden kann und die Perforationen in diesem Bereich durchströmt werden. Grundsätzlich ist angestrebt, die Kontaktfläche sowohl in axialer Richtung des Stützelements, d.h. quer zur Förderbandrichtung, als auch in Förderbandrichtung möglichst gering zu halten, um hierdurch einen möglichst großen Luftdurchtritt durch die Perforationen des Förderbands zu erzielen. In Abhängigkeit der Belastbarkeit des Förderbandes, des Stützelements sowie der Stützflächen können daher auch Kontaktflächen bereitgestellt werden, die sich einzeln bzw. in der Summe nur über 10% oder 5% der Förderbandbreite erstrecken.

Bei einer besonders bevorzugten Ausführungsform umfasst das Stützelement eine Stützwalze, die um die Rotationsachse drehbar gelagert ist. Auf der solcherart drehbar gelagerten Stützwalze können die Stützflächen ausgebildet sein und auf diese Weise in einfacher Weise die Drehbarkeit der Stützflächen gegenüber dem Förderband sichergestellt werden, um ein praktisch reibungsfreies Abrollen des Förderbands auf den Stützflächen zu erzielen. Die Lagerung der Stützwalze kann dabei beispielsweise durch eine Wälz- oder Gleitlagerung mit beidseitiger oder einseitiger Lagerung erfolgen.

Es ist vorgesehen, dass das Stützelement einen Grundkörper und eine oder mehrere auf dem Grundkörper um die Rotationsachse drehbar gelagerte Hülse(n) umfasst, an der/denen die Stützfläche ausgebildet ist. So kann der Grundkörper starr befestigt, d.h. nicht drehbar gelagert ausgeführt sein und die Drehbarkeit der Stützflächen wird durch eine drehbare Lagerung der Hülsen auf dem Grundkörper bereitgestellt. Eine solche Relativbeweglichkeit zwischen dem Grundkörper und den Hülsen verhindert Anhaftungen auf dem Grundkörper. Insoweit kann auch bei der vorgenannten Ausführungsform mit drehbar gelagerter Stützwalze eine Ausgestaltung mit drehbar auf dieser Stützwalze gelagerten Hülsen gewählt werden, an denen die Stützflächen ausgebildet sind, um Anhaftungen durch eine Relativbewegung zwischen Hülse und Stützwalze abzulösen.

Der Grundkörper bzw. die Stützwalze der Erfindung kann dabei bei diesen Ausgestaltungen, wie auch den vorgenannten und nachfolgenden Ausgestaltungen, grundsätzlich als Vollstab, Profil, Rohr, beispielsweise Rechteckrohr oder Rundrohr oder dergleichen ausgeführt sein.

Weiterhin ist es bevorzugt, wenn mehrere in Förderrichtung voneinander beabstandete Stützelemente vorgesehen sind. Grundsätzlich kann die Erfindung beispielsweise mit einem mittig zwischen den beiden Umlenkrollen eines Endlos-Förderbandes angeordnetem Stützelement verwirklicht werden. Häufig ist es jedoch bei längeren Förderbändern wünschenswert, mehrere Stützelemente verteilt über die Länge des Förderbandes vorzusehen, um keine größeren Durchhänge des Förderbandes zu erhalten. So können beispielsweise drei Stützelemente vorgesehen werden, die mit einem Abstand von jeweils einem Viertel des Abstands zwischen den beiden Umlenkrollen zueinander bzw. zu den Umlenkrollen angeordnet sind.

Dabei ist es, wenn mehrere umlaufende Stützflächen und mehrere Stützelemente vorgesehen sind, insbesondere bevorzugt, wenn die Stützflächen zweier benachbarter Stützelemente axial zueinander versetzt sind. Bei dieser Ausgestaltung wird erreicht, dass die Kontaktpunkte zwischen dem Förderband und zwei benachbarten Stützelementen nicht auf einer, sich in Förderrichtung erstreckenden Linie liegen, sondern zueinander versetzt sind. Auf diese Weise kann einerseits eine ungünstige Ausbildung von Rinnen im Förderband verhindert werden, da die Abstützung des Förderbands über dessen gesamte Länge an mehreren, sich über die Breite des Förderbands erstreckenden und zueinander versetzten Punkten erfolgt. Zudem kann durch diese Ausgestaltung zuverlässig verhindert werden, dass sich an der Unterseite des Förderbands oder an den Stützelementen oder Umlenkrollen des Förderbandes Anhaftungen des zu trocknenden Stoffes bilden, da praktisch jeder Bereich des Förderbands durch diese Anordnungsweise der Stützflächen einer zyklischen Punktbelastung ausgesetzt wird und Anhaftungen hiermit abgelöst werden. Dabei können auch die Stützflächen von drei oder mehr unmittelbar hintereinander angeordneten Stützelementen so zueinander versetzt sein, dass sie nicht in einer, sich in Förderrichtung erstreckender Linie angeordnet sind oder die Stützflächen können jeweils so angeordnet werden, dass die Stützflächen von zwei Stützelementen, die in Förderrichtung vor und hinter einem Stützelement angeordnet sind, in einer Linie in Förderrichtung liegen.

Weiterhin ist es bevorzugt, wenn das/die Stützelement(e) zwischen Obertrum und Untertrum des Horizontal-Bandförderers angeordnet ist/sind und den Obertrum des Horizontal-Bandförderers stützt/stützen. Auf diese Weise kann in vorteilhafter Weise der typischerweise den zu trocknenden Stoff tragende Obertrum eines Endlos-Förderbandes direkt von unterhalb durch die Stützelemente abgestützt werden.

Das Stützelement umfasst einen Grundkörper auf den zumindest ein Stützkörper aufgeschoben ist, welcher die umlaufende Stützfläche ausbildet. Diese Ausgestaltung ermöglicht einerseits eine kostengünstige Fertigungstechnik der erfindungsgemäßen Stützelemente und kann andererseits insbesondere dann, wenn Trocknungsvorrichtungen mit mehreren Stützelementen vorgesehen sind, zu einer günstigen und variablen Serienfertigung der mehreren Stützelemente in unterschiedlichen Längen und mit unterschiedlicher Anzahl von Stützkörpern dienen, ohne dass hierzu die umlaufenden Stützflächen individuell ausgebildet werden müssen. Der Stützkörper kann beispielsweise als aufgeschobener O-Ring, Drahtring oder dergleichen ausgebildet sein und kann in beliebiger Weise axial versetzt auf dem Grundkörper angeordnet werden.

Der Stützkörper ist an einer ersten Hülse ausgebildet, die sich axial in zumindest einer Richtung vom Stützkörper erstreckt und die eine axiale Anschlagfläche für eine zweite, benachbarte Hülse mit Stützkörper beinhaltet. Mit dieser Fortbildung wird der Abstand zwischen den durch die Stützkörper gebildeten umlaufenden Stützflächen einerseits definiert und andererseits sichergestellt, dass sich dieser Abstand nicht im Betrieb verändern kann, indem jeweils Hülsen in axialer Folge aufgesteckt werden, an denen die Stützkörper ausgebildet sind und die aneinander solcherart anliegen, dass der Abstand zwischen den Stützkörpern zweier Hülsen sichergestellt ist.

Dabei ist zu verstehen, dass eine Hülse einen oder mehrere Stützkörper aufweisen kann. In der einfachsten Ausführungsform weist eine Hülse an einem axialen Ende einen Stützkörper auf und an dem anderen axialen Ende eine Anschlagfläche auf, so dass bei Aneinanderreihung mehrerer solcher Hülsen die Stützkörper jeweils um die Länge der Hülse voneinander beabstandet sind.

Noch weiter ist es dabei bevorzugt, wenn die Hülse zumindest zwei gleichmäßig über den Umfang verteilte, sich axial erstreckende Stege aufweist, welche den Stützkörper mit der axialen Anschlagfläche verbinden und zwischen denen Öffnungen ausgebildet sind. Durch diese Ausgestaltung kann die Hülse einerseits materialsparend hergestellt werden und andererseits werden Anhaftungen auf der Hülse und auf dem Grundkörper vermieden, da durch die Stege eine geringfügige Relativbewegung zwischen Hülse und Grundkörper zur Ablösung solcher Anhaftungen führt.

Noch weiter ist es bevorzugt, wenn die Hülse einen die umlaufende Stützfläche ausbildenden Stützkörper und einen die axiale Anschlagfläche ausbildenden Anschlagring aufweist und der Anschlagring mit dem Stützkörper durch zumindest zwei, vorzugsweise vier sich axial erstreckende Stege verbunden sind, zwischen denen Öffnungen ausgebildet sind. Diese Ausgestaltung stellt eine fertigungstechnisch und konstruktiv vorteilhafte Geometrie bereit, die in einfacher Weise dazu genutzt werden kann, um Stützelemente mit den entsprechenden, umlaufenden Stützflächen zu versehen.

Noch weiter ist es bevorzugt, wenn die Hülse einen eine erste axiale Anschlagfläche ausbildenden ersten Anschlagring und einen eine zweite axiale Anschlagfläche ausbildenden zweiten Anschlagring sowie einen die umlaufende Stützfläche ausbildenden Stützkörper umfasst, der zwischen dem ersten und zweiten Anschlagring angeordnet ist und jeweils durch zumindest zwei, vorzugsweise vier sich axial erstreckende Stege mit jedem der Anschlagringe verbunden ist, zwischen denen Öffnung ausgebildet sind. Auf diese Weise wird eine beidseitige Beabstandung des Stützkörpers von Anschlagringen an jeder Hülse erzielt und folglich vermieden, dass eine Stützfläche an einem axialen Ende des zylindrischen Grundkörpers zu liegen kommt, wo sie möglicherweise nicht die gewünschte Stützwirkung auf das Förderband ausüben kann.

Schließlich ist es bevorzugt, die Hülse einstückig auszubilden, vorzugsweise aus Kunststoff, um hierdurch die Fertigungskosten zu reduzieren und Verschmutzungen im Bereich von Verbindungselementen an der Hülse zu vermeiden.

Die vorgenannten Ausführungsformen mit einer Hülse, an der ein Stützkörper ausgebildet ist, welcher die umlaufende Stützfläche ausbildet, ist insbesondere gut dafür geeignete, bestehende Trocknungsvorrichtungen, welche mit zylindrischen, glattflächigen Stützelementen ausgerüstet sind, solcherart nachzurüsten, dass die erfindungsgemäßen Vorteile in Bezug auf besseren Trocknungsluftdurchsatz und Vermeidung von Anhaftungen erzielt werden.

Die erfindungsgemäße Trocknungsvorrichtung arbeitet vorzugsweise nach einem Verfahren zum Trocknen pastöser oder körniger Stoffe nach Anspruch 13.

Eine bevorzugte Ausführungsform der Erfindung wird anhand der beiliegenden Figuren erläutert. Es zeigen:
- Fig. 1:: eine perspektivische Teildarstellung einer erfindungsgemäßen Trocknungsvorrichtung,
- Fig. 2:: eine Frontalansicht einer Stützwalze mit darauf aufliegendem oberen Förderbandtrum,
- Fig. 3:: eine vergrößerte Ausschnittsdarstellung aus Figur 2,
- Fig. 4:: eine perspektivische Darstellung einer Hülse, welche Bestandteil der Stützwalze gemäß Figuren 2 und 3 ist,
- Fig. 5:: eine erste Ausführungsform für eine Hülse mit daran ausgebildetem Stützkörper zur Definition der Stützfläche,
- Fig. 6:: eine zweite Ausführungsform einer solchen Hülse, und
- Fig. 7:: eine dritte Ausführungsform einer solchen Hülse.

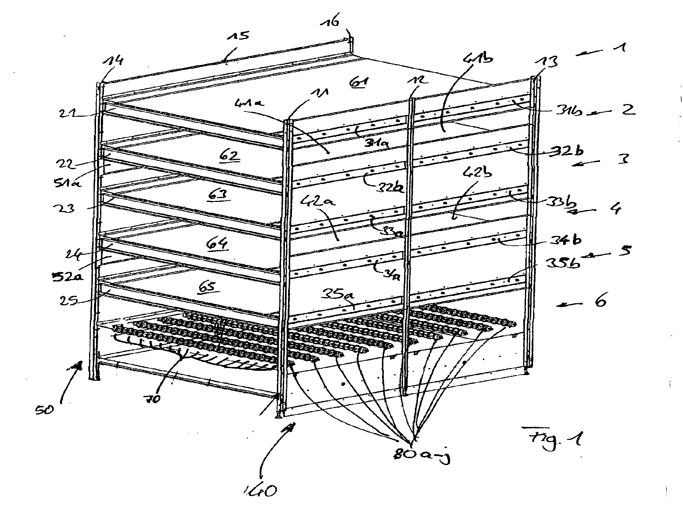

Figur 1 zeigt ein Segment einer erfindungsgemäßen Trocknungsvorrichtung, bei welcher sechs Etagen 1-6 vorgesehen sind, in denen jeweils ein perforiertes Förderband 61-65 läuft. Mehrere solche Segmente können an ihren Stirnseiten aneinandergereiht werden, um solcherart eine Trocknungsvorrichtung modularer Länge auszubilden.

Die erfindungsgemäße Trocknungsvorrichtung umfasst ein Gehäuse, welches aus mehreren Vertikalstreben 11-16 und Horizontalstreben 21-25 sowie 31-35a, b ausgebildet ist, die solcherart miteinander verbunden ist, dass ein im Wesentlichen kubisches Gehäuse ausgebildet ist.

Das Gehäuse weist eine erste Seitenwand 40 auf, in welche Einlassöffnungen 41 a, b, 42a, b eingelassen sind. Die Einlassöffnungen 42a, b sind solcherart angeordnet, dass sie Trocknungsluft in jeweils zwei Etagen 1, 2 bzw. 3, 4 einlassen.

Auf einer der Einlass-Seitenwand gegenüberliegenden Auslass-Seitenwand 50 sind Auslassöffnungen 51a, 52a angeordnet. Die Auslassöffnungen 51a, 52a sind in den Etagen angeordnet, in welchen auf der Einlassseite keine Einlassöffnungen angeordnet sind.

Die Etagen werden durch umlaufende Endlosförderbänder 61-65 (unterstes Förderband nicht dargestellt) voneinander getrennt. Die Endlosförderbänder 61-65 sind mit einer Vielzahl von Perforationen (nicht dargestellt) versehen. Jeweils zwei benachbarte Förderbänder werden durch Einlassluftöffnungen mit Trocknungsluft versorgt, welche in der Etage angeordnet sind, die von den beiden benachbarten Förderbändern oben bzw. unten begrenzt wird. Die so zugeführte Trocknungsluft durchströmt die Förderbänder und tritt durch eine Austrittsöffnung oberhalb bzw. unterhalb des Förderbands aus dem Gehäuse wieder aus. Das heißt, in der dargestellten Ausführungsform strömt die Trocknungsluft durch die Einlassöffnung 42a, b ein, durchströmt die Förderbänder 63 und 64 und tritt durch die Auslassöffnungen 51 a bzw. entsprechend 52a wieder aus.

Unterhalb jedes Förderbandes sind in dem dargestellten Segment insgesamt zehn Stützwalzen 80 angeordnet, welche das obere Trum des Förderbands von unten abstützen und auf diese Weise einen Durchhang des Förderbands vermeiden. Die Stützwalzen 80 sind jeweils an ihren axialen Stirnseiten in den Horizontalstreben 31-35a drehbar gelagert befestigt.

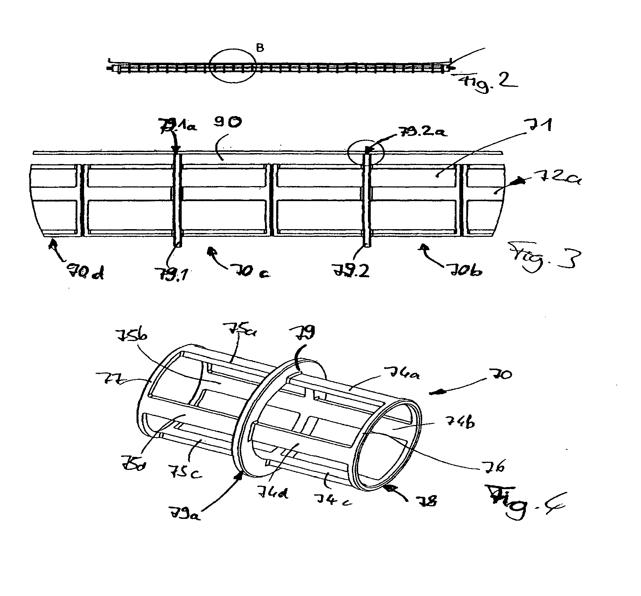

Bezug nehmend auf Figur 2 und 3 umfasst eine Stützwalze 80 einen zylindrischen Grundkörper 81, auf dem eine Vielzahl von Hülsen 70a-d aufgeschoben sind.

Oberhalb der Stützwalzen 80 läuft ein Obertrum 60 des Förderbands, welches an den Seiten Seitenwandbegrenzungen aufweist, um ein Herunterfallen des zu trocknenden Stoffes zur Seite zu verhindern.

Wie insbesondere aus Figur 4 zu erkennen ist, umfasst eine erste Ausführungsform einer Hülse 70 einen zentralen Stützring 79, der den größten Außendurchmesser der Hülse definiert und sich über seinen vollen Umfang über den Rest der Hülse in radialer Richtung erhebt. Der zentrale Stützring 79 ist in axialer Richtung mittig an der Hülse ausgeformt und mit jeweils vier Streben zu beiden Seiten der Hülse einstückig verbunden. Die vier Streben 74a-d, 75a-d erstrecken sich von dem Stützring 79 in axialer Richtung zu den axialen Enden der Hülse und sind an jedem axialen Ende mit einem Anschlagring 76 bzw. 77 verbunden.

Die Anschlagringe 76, 77 stellen jeweils eine axiale Anschlagfläche 78 dar, wie gut aus Figur 3 zu erkennen, um einen definierten Abstand zwischen den Stützringen 79 zweier benachbarten Hülsen 70 zu erzielen und im Betrieb sicherzustellen.

Wie aus Figur 3 weiterhin ersichtlich ist, liegt der obere Trum des Förderbands 60 nur auf der äußeren Umfangsfläche 79.1a und 79.2a der Stützringe 79.1 und 79.2 auf, wodurch sich praktisch ein Punktkontakt, geometrisch genau ein sich über die Breite des Stützrings erstreckender kurzer Linienkontakt ergibt. Zwischen dem oberen Trum und dem Grundkörper der Stützwalze wird somit ein Zwischenraum 90 bereitgestellt, durch welchen die Trocknungsluft strömen und folglich auch diejenigen Perforationen erreichen kann, die unmittelbar oberhalb der Stützwalze angeordnet sind.

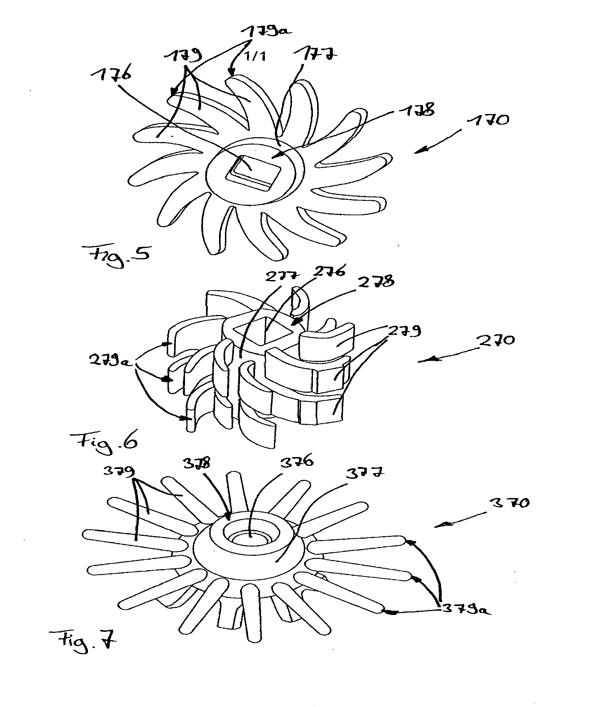

Figur 5 zeigt eine zweite Ausgestaltung einer Hülse 170, welche sich zur Definition einer erfindungsgemäßen Stützfläche eignet. Die Hülse ist ausgebildet, um auf ein drehbar gelagertes Vierkantrohr aufgeschoben zu werden. Die abgebildete Hülse 170 umfasst hierzu eine viereckige, zentrale Ausnehmung 176, durch welche sich die Rotationsachse eines vierkantförmigen Stützelements erstrecken kann. Die viereckige Ausnehmung 176 ist an einem zylindrischen Körper 177 ausgebildet, der beidseits axiale Anschlagflächen 178 aufweist. Ausgehend von dem zylindrischen Grundkörper 177 erstrecken sich eine Vielzahl von leicht gekrümmten Fingern 179 in radial-tangentialer Richtung nach außen. Die äußeren Endflächen 179a dieser Finger bilden eine umlaufende Stützfläche aus, indem sie mehrere, unterbrochene Stützflächenbereiche in zirkulär umlaufender Richtung aneinander reihen. Auf diesen aneinandergereihten Stützflächenbereichen stützt sich das Förderband im Betrieb der erfindungsgemäßen Vorrichtung ab.

Figur 6 zeigt eine dritte Ausführungsform einer erfindungsgemäßen Hülse 270 zur Definition der Stützfläche. Wiederum umfasst die Hülse 270 einen zylindrischen Grundkörper 277, durch den sich in axialer Richtung und konzentrisch zur Rotationsachse des Stützelements, auf das die Hülse aufgeschoben wird, eine quadratische Öffnung 276 erstreckt. Beidseits des Grundkörpers sind axiale Anschlagflächen 278 bereitgestellt.

Vom Grundkörper 277 erstrecken sich in radial-tangentialer Richtung und leicht gekrümmt eine Vielzahl von Fingern 279, die unregelmäßig über den Umfang des zylindrischen Grundkörpers angeordnet sind. Die Finger 279 sind sowohl in axialer wie auch in umfänglicher Richtung unregelmäßig angeordnet und erstrecken sich in übereinstimmender radialer Distanz zu einer durch ihre Enden 279a gebildeten, zylindrischen Umhüllenden, welche die Stützfläche darstellt.

Figur 7 zeigt eine vierte Ausführungsform einer erfindungsgemäßen Hülse 370 zur Definition der Stützfläche für das Förderband. Die Hülse 370 umfasst einen rotationssymmetrischen Grundkörper 377, in dem eine sich in axialer Richtung und konzentrisch zur Rotationsachse der Stützfläche ausgebildete zylindrische Bohrung 376 erstreckt. Eine axiale Anschlagfläche 378 ist an dem Grundkörper 377 ausgebildet. Von dem Grundkörper 377 erstrecken sich eine Vielzahl von Fingern in sternförmiger Weise radial zu einer äußeren Umhüllenden. Jeder der Finger 379 ist gleich lang, so dass die Endflächen 379a der Finger 379 auf einer kreisförmigen Fläche zu liegen kommen und hierdurch wiederum eine durch mehrere Stützflächenbereiche gebildete Stützfläche definieren.

## Patentansprüche

1. Trocknungsvorrichtung für pastöse oder körnige Stoffe, umfassend:
ein Gehäuse (11-16, 31 b-35b, 21-25) mit zumindest einer Einlassöffnung (41a, b, 42a, b) und zumindest einer Auslassöffnung (51a, 52a) für Trocknungsluft,
zumindest einen Horizontal-Bandförderer (62-65), der so angeordnet ist, dass er die zu trocknenden Stoffe von einer Aufgabestelle zu einer Abgabestelle fördert und der ein Förderband umfasst,
- auf dem die zu trocknenden Stoffe während der Förderung lagerbar sind,
- das eine Mehrzahl von Perforationen aufweist und
- das so in dem Gehäuse angeordnet ist, dass von der Einlass- zur Auslassöffnung strömende Trocknungsluft die Perforationen durchströmt, zumindest ein das Förderband stützendes, sich quer zur Förderrichtung erstreckendes, unter dem Förderband angeordnetes Stützelement (80), an dem zumindest eine sich in radialer Richtung über das Stützelement hinaus erstreckende, umlaufende Stützfläche (79a; 179a; 279a; 379a) definiert ist, auf welcher das Förderband abgestützt ist,
wobei die Stützfläche sich axial über weniger als die Förderbandbreite erstreckt,
und die Stützfläche drehbar um eine sich quer zur Förderrichtung des Förderbandes erstreckende Rotationsachse gelagert ist,
**dadurch gekennzeichnet, dass** das Stützelement einen Grundkörper (80) und
eine oder mehrere auf dem Grundkörper um die Rotationsachse drehbar gelagerte Hülse(n) (70: 170, 270: 370) umfasst, an denen die Stützfläche ausgebildet ist, und
dass ein Stützelement einen Grundkörper umfasst,
auf den zumindest ein Stützkörper aufgeschoben ist, welcher die umlaufende Stützfläche definiert und dass der Stützkörper an einer ersten Hülse (70, 170) ausgebildet ist, die sich axial in zumindest einer Richtung vom Stützkörper erstreckt und die eine axiale Anschlagfläche (78; 178) für eine zweite, benachbarte Hülse mit Stützkörper beinhaltet.

2. Trocknungsvorrichtung nach Anspruch 1,
**dadurch gekennzeichnet, dass** die umlaufende Stützfläche durch eine sich radial erstreckende Erhebung (79), insbesondere durch die äußere Umfangsfläche eines sich radial erstreckenden Rings ausgebildet ist.

3. Trocknungsvorrichtung nach Anspruch 1.
**dadurch gekennzeichnet, dass** die umlaufende Stützfläche durch mehrere, sich radial erstreckende Erhebungen (179; 279; 379), die entlang einer um das Stützelement auf einer Kreisbahn umlaufenden Linie aneinandergereiht sind, insbesondere durch die Endflächen (179; 279; 379) einer Vielzahl von sich radial erstreckenden Fingern ausgebildet ist.

4. Trocknungsvorrichtung nach einem der vorhergehenden Ansprüche, **dadurch gekennzeichnet, dass** mehrere axial voneinander beabstandete Stützflächen (79.1, 79.2)an einem Stützelement ausgebildet sind, auf welchen das Förderband abgestützt ist.

5. Trocknungsvorrichtung nach einem der vorhergehenden Ansprüche, **dadurch gekennzeichnet, dass** das Stützelement sich über die gesamte Förderbandbreite erstreckt und die Kontaktfläche zwischen dem Förderband und der Stützfläche bzw. der Summe der Stützflächen an einem Stützelement in axialer Richtung weniger als die Hälfte, vorzugsweise weniger als ein Viertel der Förderbandbreite beträgt.

6. Trocknungsvorrichtung nach einem der vorhergehenden Ansprüche, **dadurch gekennzeichnet, dass** das Stützelement eine Stützwalze (80) umfasst, die um die Rotationsachse drehbar gelagert ist.

7. Trocknungsvorrichfiung nach einem der vorhergehenden Ansprüche, **gekennzeichnet durch** mehrere in Förderrichtung voneinander beabstandete Stützelemente.

8. Trocknungsvorrichtung nach Anspruch 3 und Anspruch 7,
**dadurch gekennzeichnet, dass** die Stützflächen zweier benachbarter Stützelemente axial zueinander versetzt sind.

9. Trocknungsvorrichtung nach einem der vorhergehenden Ansprüche, **dadurch gekennzeichnet, dass** das/die Stützelement(e) zwischen Obertrum und Untertrum des Horizontat-Bandförderers angeordnet ist/sind und den Obertrum des Horizontal-Bandförderers stützt/stützen.

10. Trocknungsvorrichtung nach dem vorhergehenden Anspruch,
**dadurch gekennzeichnet, dass** die erste und/oder zweite Hülse zumindest zwei gleichmäßig über den Umfang verteilte, sich axial erstreckende Stege aufweist, welche mit dem Stützkörper und der axialen Anschlagfläche verbunden sind und zwischen denen Öffnungen ausgebildet sind.

11. Trocknungsvorrichtung nach einem der vorhergehenden Ansprüche 9
oder 10,
**dadurch gekennzeichnet, dass** die erste und/oder zweite Hülse einen die umlaufende Stützfläche (79a) ausbildenden Stützkörper (79) und einen die axiale Anschlagfläche (78) ausbildenden Anschlagring (76) aufweist und der Anschlagring mit dem Stützkörper durch zumindest zwei, vorzugsweise vier sich axial erstreckende Stege (74a-d) verbunden ist, zwischen denen Öffnungen ausgebildet sind.

12. Trocknungsvorrichtung nach einem der vorhergehenden Ansprüche 9
oder 10,
**dadurch gekennzeichnet, dass** die erste und/oder zweite Hülse einen eine erste axiale Anschlagfläche ausbildenden ersten Anschlagring (76) und einen eine zweite axiale Anschlagfläche ausbildenden zweiten Anschlagring (77) sowie einen die umlaufende Stützfläche ausbildenden Stützkörper (79) umfasst, der zwischen dem ersten und zweiten Anschlagring angeordnet ist und jeweils durch zumindest zwei, vorzugsweise vier sich axial erstreckende Stege (74a-, 75a-d) mit jedem der Anschlagringe verbunden ist, zwischen denen Öffnungen ausgebildet sind.

13. Verfahren zum Trocknen pastöser oder körniger Stoffe, mit den Schritten:
- Fördern der zu trocknenden Stoffe auf einem Förderband mit einer Vielzahl von Perforationen,
- Durchleiten von Trocknungsluft durch die Vielzahl von Perforationen, wobei das Förderband auf mehreren, axial voneinander beabstandeten, sich radial erstreckenden umlaufenden und drehbaren Stützflächen an mehreren in Förderrichtung voneinander beabstandeten Stützelementen abgestützt wird, und die Stützflächen durch Stützkörper gebildet werden, die auf einen Grundkörper aufgeschoben werden und die an Hülsen ausgebildet sind, die sich jeweils axial in zumindest einer Richtung vom jeweiligen Stützkörper erstrecken, auf dem Grundkörper um die Rotationsachse drehbar gelagert sind und eine axiale Anschlagfläche für eine zweite, benachbarte Hülse mit Stützkörper beinhalten.

## Claims

1. Drying device for paste-like or granular substances,
comprising:
a housing (11-16, 31b-35b, 21-25) with at least one inlet opening (41a, b, 42a, b) and at least one outlet opening (51a, 52a) for drying air,
at least one horizontal belt conveyor (62-65) which is arranged so that it conveys the substances to be dried from a feed point to a delivery point and which comprises a conveyor belt
- on which the substances to be dried can be placed during conveying,
- which has a plurality of perforations and
- which is arranged in the housing so that drying air flowing from the inlet opening to the outlet opening flows through the perforations,
at least one support element (80), supporting the conveyor belt, extending transversely to the conveying direction and arranged below the conveyor belt, on which at least one circumferential support surface (79a; 179a; 279a; 379a), and on top of which the conveyor belt is supported, extending in radial direction beyond the support element, is defined, wherein the support surface extends axially over less than the width of the conveyor belt, and the support surface is mounted turnably on an axis of rotation extending transversely to the conveying direction of the conveyor belt,
**characterised in that** the support element comprises a base body (80) and one or more sleeve(s) (70; 170; 270; 370), mounted on the base body turnably on the axis of rotation, on which the support surface is developed, and
that a support element comprises a base body, onto which at least one support body is slipped, which defines the circumferential support surface and that the support body is developed on a first sleeve (70, 170) which extends axially in at least one direction from the support body and which contains an axial stop face (78; 178) for a second adjacent sleeve with support body.

2. Drying device according to claim 1,
**characterised in that** the circumferential support surface is developed through a radially extending elevation (79), in particular through the external circumferential area of a radially extending ring.

3. Drying device according to claim 1,
**characterised in that** the circumferential support surface is developed through a plurality of radially extending elevations (179; 279; 379) which are strung together along a circumferential line around the support element on a circuit, in particular through the end surfaces (179; 279; 379) of a multiplicity of radially extending fingers.

4. Drying device according to one of the preceding claims,
**characterised in that** a plurality of support surfaces (79.1, 79.2), axially spaced from one another, are developed on a support element on top of which the conveyor belt is supported.

5. Drying device according to one of the preceding claims,
**characterised in that** the support element extends over the entire width of the conveyor belt and the contact surface, between the conveyor belt and the support surface or the total of the support surfaces on a support element in axial direction is less than half, preferably less than a quarter, of the width of the conveyor belt.

6. Drying device according to one of the preceding claims,
**characterised in that** the support element comprises a support roll (80) which is mounted turnably on the axis of rotation.

7. Drying device according to one of the preceding claims,
**characterised by** a plurality of support elements spaced from one another in the conveying direction.

8. Drying device according to claim 3 and claim 7, **characterised in that** the support surfaces of two adjacent support elements are offset axially to one another.

9. Drying device according to one of the preceding claims,
**characterised in that** the support element(s) is/are arranged between the top run and the bottom run of the horizontal belt conveyor and supports/support the top run of the horizontal belt conveyor.

10. Drying device according to one of the preceding claims,
**characterised in that** the first and/or second sleeve has at least two axially extending bars distributed evenly over the circumference, which are connected to the support body and the axial stop face and between which openings are developed.

11. Drying device according to one of the preceding claims 9 or 10,
**characterised in that** the first and/or second sleeve has a support body (79) developing the circumferential support surface (79a) and a stop ring (76) developing the axial stop face (78) and the stop ring is connected to the support body by at least two, preferably four, axially extending bars (74a-d) between which openings are developed.

12. Drying device according to one of the preceding claims 9 or 10,
**characterised in that** the first and/or second sleeve comprises a first stop ring (76) developing a first axial stop face and a second stop ring (77) developing a second axial stop face, and a support body (79), developing the circumferential support surface, which is arranged between the first and second stop ring and in each case is connected by at least two, preferably four, axially extending bars (74a-75a-d) to each of the stop rings between which openings are developed.

13. Method for drying paste-like or granular substances, with the steps:
- conveying the substances to be dried on a conveyor belt with a multiplicity of perforations,
- passing drying air through the multiplicity of
perforations,
wherein the conveyor belt is supported on top of a plurality of axially spaced from one another, radially extending circumferential and turnable support surfaces on a plurality of support elements spaced from one another in the conveying direction, and the support surfaces are formed by support bodies which are slipped onto a base body and which are developed on sleeves which in each case extend axially in at least one direction from the respective support body on top of which base bodies are mounted turnably on the axis of rotation and contain an axial stop face for a second adjacent sleeve with support body.

## Revendications

1. Dispositif de séchage pour matières pâteuses ou granuleuses, comprenant :
un boîtier (11-16, 31b-35b, 21-25) doté au moins d'une ouverture d'entrée (41a, b, 42a, b) et au moins d'une ouverture de sortie (51a, 52a) pour l'air de séchage,
au moins un convoyeur à bande horizontal (62-65), qui est disposé de telle manière qu'il transporte les matières à sécher depuis un emplacement de chargement en direction d'un emplacement de déchargement, et qui comprend une bande transporteuse,
- sur laquelle les matières à sécher peuvent être logées lors du convoyage,
- qui présente une multitude de perforations, et
- qui est disposée de telle manière dans le boîtier que l'air de séchage circulant de l'ouverture d'entrée en direction de l'ouverture de sortie traverse les perforations,
au moins un élément de soutien (80) soutenant la bande transporteuse, s'étendant de manière transversale par rapport au sens de transport, disposé sous la bande transporteuse, au niveau duquel élément de soutien au moins une surface de soutien (79a; 179a; 279a; 379a) périphérique s'étendant dans le sens radial au-delà de l'élément de soutien est définie, sur laquelle s'appuie la bande transporteuse,
sachant que la surface de soutien s'étend de manière axiale sur moins de la largeur de la bande transporteuse,
et sachant que la surface de soutien est logée de manière à pouvoir tourner autour d'un axe de rotation s'étendant de manière transversale par rapport au sens de transport de la bande transporteuse,
**caractérisé en ce que** l'élément de soutien comprend un corps de base (80) et un ou
plusieurs manchons (70 ; 170, 270 ; 370) logés sur le corps de base de manière à pouvoir tourner autour de l'axe de rotation, au niveau desquels manchons est réalisée la surface de soutien, et
**en ce qu'**un élément de soutien comprend un corps de base, sur lequel est enfilé au moins un corps de soutien qui définit la surface de soutien périphérique, et **en ce que** le corps de soutien est réalisé au niveau d'un premier manchon (70, 170), qui s'étend de manière axiale dans au moins un sens depuis le corps de soutien et qui comporte une surface de butée (78 ; 178) axiale pour un deuxième manchon adjacent présentant un corps de soutien.

2. Dispositif de séchage selon la revendication 1,
**caractérisé en ce que** la surface de soutien périphérique est réalisée par une projection (79) s'étendant radialement, en particulier par la surface périphérique extérieure d'une bague s'étendant radialement.

3. Dispositif de séchage selon la revendication 1,
**caractérisé en ce que** la surface de soutien périphérique est réalisée par plusieurs projections (179 ; 279 ; 379) s'étendant radialement, lesquels sont alignées le long d'une ligne suivant le pourtour de l'élément de soutien sur une trajectoire circulaire, en particulier par les surfaces d'extrémité (179 ; 279 ; 379) d'une pluralité de doigts s'étendant radialement.

4. Dispositif de séchage selon l'une quelconque des revendications précédentes, **caractérisé en ce que** plusieurs surfaces de soutien (79.1, 79.2) espacées axialement les unes des autres sont réalisées au niveau d'un élément de soutien, sur lesquelles s'appuie la bande transporteuse.

5. Dispositif de séchage selon l'une quelconque des revendications précédentes, **caractérisé en ce que** l'élément de soutien s'étend sur toute la largeur de la bande transporteuse, et **en ce que** la surface de contact située entre la bande transporteuse et la surface de soutien ou la somme des surfaces de soutien au niveau d'un élément de soutien, équivaut, dans le sens axial, à moins de la moitié, de préférence à moins d'un quart de la largeur de la bande transporteuse.

6. Dispositif de séchage selon l'une quelconque des revendications précédentes, **caractérisé en ce que** l'élément de soutien comprend un cylindre de soutien (80), qui est logé de manière à pouvoir tourner autour de l'axe de rotation.

7. Dispositif de séchage selon l'une quelconque des revendications précédentes, **caractérisé par** plusieurs éléments de soutien espacés les uns des autres dans le sens de transport.

8. Dispositif de séchage selon la revendication 3 et la revendication 7,
**caractérisé en ce que** les surfaces de soutien des deux éléments de soutien adjacents sont décalées axialement les unes par rapport aux autres.

9. Dispositif de séchage selon l'une quelconque des revendications précédentes, **caractérisé en ce que** l'élément de soutien/les éléments de soutien est/sont disposé(s) entre le brin supérieur et le brin inférieur du convoyeur à bande horizontal et soutient/soutiennent le brin supérieur du convoyeur à bande horizontal.

10. Dispositif de séchage selon la revendication précédente,
**caractérisé en ce que** le premier et/ou le deuxième manchon présentent au moins deux entretoises réparties de manière homogène sur la périphérie, s'étendant axialement, lesquelles sont reliées au corps de soutien et à la surface de butée axiale et entre lesquelles sont réalisées des ouvertures.

11. Dispositif de séchage selon l'une quelconque des revendications 9 ou 10, **caractérisé en ce que** le premier et/ou le deuxième manchons présentent un corps de soutien (79) formant la surface de soutien (79a) périphérique et une bague de butée (76) formant la surface de butée (78) axiale, et **en ce que** la bague de butée est reliée au corps de soutien par au moins deux, de préférence quatre, entretoises (74a-d) s'étendant de manière axiale, entre lesquelles entretoises sont réalisées des ouvertures.

12. Dispositif de séchage selon l'une quelconque des revendications 9 ou 10, **caractérisé en ce que** le premier et/ou le deuxième manchons comprennent une première bague de butée (76) formant une première surface de butée axiale et une deuxième bague de butée (77) formant une deuxième surface de butée axiale ainsi qu'un corps de soutien (79) formant la surface de soutien périphérique, lequel corps de soutien est disposé entre la première bague de butée et la deuxième bague de butée et qui est relié respectivement par au moins deux, de préférence quatre, entretoises (74a-, 75a-d) s'étendant de manière axiale à chacune des bagues de butée, entre lesquelles sont réalisées des ouvertures.

13. Procédé servant à sécher des matières pâteuses ou granuleuses, comportant les étapes suivantes consistant à :
- transporter les matières à sécher sur une bande transporteuse présentant une pluralité de perforations,
- guider l'air de séchage à travers la pluralité de perforations, sachant que la bande transporteuse s'appuie sur plusieurs surfaces de soutien périphériques, pouvant tourner, espacées les unes des autres de manière axiale, s'étendant de manière radiale, au niveau de plusieurs éléments de soutien espacés les uns des autres dans le sens de transport, et sachant que les surfaces de soutien sont formées par des corps de soutien, qui sont enfilés sur un corps de base et qui sont réalisés au niveau de manchons, qui s'étendent respectivement de manière axiale dans au moins un sens depuis le corps de soutien respectif, sur lequel sont logés des corps de base de manière à pouvoir tourner autour de l'axe de rotation, et qui comportent une surface de butée axiale pour un deuxième manchon adjacent présentant un corps de soutien.
